# FASCICULE DE BREVET EUROPEEN

(11) **EP 0 752 669 B1**
(45) Date de publication et mention de la délivrance du brevet: **08.11.2000**
(21) Numéro de dépôt: 96401353.6
(22) Date de dépôt: 20.06.1996
(51) Int. Cl.: G06F 13/40

(54) **Dispositif de communication entre une pluralité de modules fonctionnels installés dans une unité locale et un bus externe de type ARINC 629**
Vorrichtung zur Datenübertragung zwischen einer Mehrzahl von Funktionsmodulen in einer lokalen Buseinheit und einem externen ARINC-629-Bus
Apparatus for communicating between a plurality of function modules installed in a local bus unit and an external ARINC 629 bus

(30) Priorité: 07.07.1995 FR 9508339
(43) Date de publication de la demande: 08.01.1997
(73) Titulaire: SEXTANT AVIONIQUE, 78141 Velizy Villacoublay (FR)
(72) Inventeur: Pain, Isabelle, 78350 Jouy en Josas (FR); Toillon, Patrice, 78230 Le Pecq (FR); Ducateau, Michel, 28210 Nogent le Roi (FR); Sannino, Christian, 78125 Vieille Eglise en Yvelines (FR)
(74) Mandataire: de Saint-Palais, Arnaud Marie

(56) Documents cités:
- EP-A- 0 566 481
- US-A- 4 955 020
- HEWLETT-PACKARD JOURNAL, vol. 43, no. 2, Avril 1992, PALO ALTO, US, pages 6-14, XP000356378 DESJARDIN: "VXIbus: A Standard for Test and Measurement System Architecture"

## Description

La présente invention concerne un dispositif de communication entre un bus externe et un ensemble de modules électroniques installés dans une unité locale, telle qu'une baie électronique.

Elle s'applique notamment, mais non exclusivement, aux équipements électroniques embarqués à bord des aérodynes, ces équipements étant interconnectés par un ou plusieurs bus appelés "bus avion". Certains de ces équipements, et notamment les calculateurs, sont intégrés dans des étagères, chaque étagère regroupant un ensemble de modules interconnectés par un bus interne appelé "bus fond de panier".

Etant donné que le nombre d'équipements électroniques interconnectés à bord d'un aérodyne tend à s'accroître, il est nécessaire de pouvoir disposer d'un moyen d'interconnexion réduisant le nombre de liens physiques entre équipements, tout en procurant un débit d'information sur le bus avion de plus en plus important. Actuellement on tend vers une solution utilisant un bus multiplexé, multi-émetteur et multi-récepteur, tel que celui défini par la norme ARINC 629, ce bus pouvant être associé à un ou plusieurs autres bus redondants pour des raisons de disponibilité, et l'ensemble de bus ainsi défini doublé, ou même triplé pour pouvoir transmettre toutes les informations nécessaires.

Selon cette norme, le bus est constitué d'une paire de fils torsadés permettant un débit utile de 2 Mbits/s, chaque équipement se partageant le bus par fenêtres temporelles cycliques. Les informations sont transmises par ce bus sous la forme de trames regroupant des messages constitués de 1 à 31 blocs de données appelés "wordstrings", de 1 à 257 mots de 20 bits. Cette norme préconise au niveau de chaque émetteur, un rebouclage de l'émission sur la réception de manière à contrôler en temps réel la qualité des informations émises sur le bus. Chaque module connecté au bus comprend deux tables contenant l'identification -et la structure des messages à émettre et des blocs de données à recevoir, ainsi que les paramètres de configuration des fenêtres temporelles affectées à chaque module émetteur. Chaque équipement est en permanence à l'écoute du bus pour détecter la présence ou non d'une activité, et ainsi déterminer les instants où il peut émettre. Cette écoute lui permet également de reconnaître les codes d'identification des blocs de données dont il est destinataire.

En ce qui concerne les communications entre modules d'une même étagère, les besoins en terme de débit d'information sont plus importants. On a donc mis au point la norme ARINC 659 qui définit un bus haut débit (60 Mbits/s), redondant, également multi-émetteur et multi-récepteur multiplexé.

Il s'avère que les transmissions à de tels débits sont très sensibles aux perturbations électromagnétiques, et font de ce fait appel à des technologies coûteuses.

Par ailleurs, étant donné que les protocoles, les formats de données et les débits respectifs des bus avion et fond de panier sont différents, et que ces bus sont asynchrones entre eux, les modules de couplage assurant l'interconnexion entre le bus avion et les modules d'une étagère introduisent inévitablement un temps de retard dans la transmission des informations, et nécessite une manipulation des informations qui réduit la fiabilité de l'ensemble du système de communication.

En outre, la bande passante disponible au niveau de chacun des bus avion et fond de panier est répartie entre les équipements et les modules au moyen de tables. Dans la mesure où les bus avion et fond de panier sont différents, on a donc affaire à des tables de structures différentes pour le bus avion et chaque bus fond de panier, ce qui implique une gestion spécifique pour chaque type de table, tout en assurant la cohérence de l'ensemble. De ce fait, la configuration de ces tables implique un travail important et complexe, et donc un risque d'erreur élevé.

La présente invention a pour but de supprimer ces inconvénients. A cet effet, elle propose un dispositif de communication entre une pluralité de modules fonctionnels installés dans une unité locale et au moins un bus externe multi-émetteur, multi-récepteur multiplexé de communication avec d'autres unités locales.

Ce dispositif est caractérisé en ce qu'il comprend :
- au moins autant de bus internes que de modules fonctionnels susceptibles d'émettre des informations vers les autres modules de l'unité locale et vers le bus externe, chaque bus interne étant de type multi-émetteur, multi-récepteur, multiplexé, et respectant le protocole temporel et le format des informations transitant sur le bus externe, lesdits modules fonctionnels étant couplés aux bus internes de manière à ce que chaque module susceptible d'émettre des messages soit l'unique émetteur sur au moins l'un des bus internes, et récepteur sur les autres bus internes;
- un module de couplage conçu pour assurer le transfert vers le bus externe, des informations circulant sur les bus internes et destinées à une autre unité locale raccordée au bus externe,
   et
- un bus interne supplémentaire pour chaque bus externe, assurant la diffusion à l'intérieur de l'unité locale des informations transitant sur le bus externe, ce bus de diffusion étant de même type que lesdits bus internes, et étant relié au bus externe et aux modules fonctionnels.

Cette solution offre de nombreux avantages. Tout d'abord, chaque module émetteur dispose d'un bus multi-émetteur multi-récepteur propre, qu'il utilise en mono-émetteur. La bande passante d'émission mise à la disposition de chaque module correspond donc à la bande passante totale du bus, c'est-à-dire, 2 Mbits/s dans le cas d'un bus de type ARINC 629. Il n'y a donc plus d'allocation dynamique partagée de la bande passante, et donc plus de risque qu'un module défaillant monopolise le bus interne.
Les bus internes n'étant plus multiplexés, on bénéficie d'une isolation physique complète entre modules.

Cette solution met en oeuvre un module de couplage simplifié dans la mesure où d'une part, le type des bus utilisés en interne est analogue à celui du bus externe, aucun traitement particulier n'est donc nécessaire pour transférer les informations circulant sur le bus externe vers l'intérieur de l'unité locale, mise à part une conversion de niveau électrique. D'autre part, les transmissions sur les bus externe et internes sont effectuées selon un même protocole, et utilisent les mêmes formats de données, si bien que les traitements à effectuer pour transférer des informations d'un bus interne vers le bus externe sont très simplifiés par rapport à une solution utilisant deux types de bus différents.

Par ailleurs, le transfert direct, sans traitement intermédiaire des informations du bus externe vers le bus interne de diffusion permet d'éviter l'introduction d'un temps de retard, ainsi que des manipulations d'informations introduisant des risques de panne supplémentaires.

En outre, du fait que les bus internes utilisent le même protocole spatial et temporel que le bus externe, les mêmes outils peuvent être employés pour établir la base de données de communication rassemblant les caractéristiques de toutes les informations échangées par le bus externe, pour élaborer les trames et générer les tables définissant pour chaque module, les informations à émettre et à recevoir. De même, les outils d'émulation et d'observation du bus externe sont comparables à ceux des bus internes.

Selon une particularité de l'invention, chaque module fonctionnel comprend une unité de contrôle des bus internes conçue pour assurer le tri de tous les blocs de données circulant sur les bus internes pour ne transférer que ceux destinés au module, et pour émettre des messages sur le bus affecté au module.

Selon une autre particularité de l'invention, le module de couplage dispose d'un bus interne sur lequel il est l'unique émetteur, lui permettant d'envoyer aux modules fonctionnels de l'unité locale des messages de service et de maintenance, de manière à pouvoir indiquer aux modules fonctionnels les défauts de transfert de message et les pannes éventuelles.

Avantageusement, le module de couplage est connecté à au moins deux bus externes couplés respectivement à deux bus internes de diffusion de manière à ce que les messages circulant sur les deux bus externes soient diffusés vers les modules fonctionnels de l'unité locale.

Un mode de réalisation du dispositif selon l'invention sera décrit ci-après, à titre d'exemple non limitatif, avec référence aux dessins annexés dans lesquels :
La figure 1 représente schématiquement une unité locale comprenant un ensemble de modules interconnectés grâce au dispositif selon l'invention ;
Les figures 2 et 3 sont des représentations schématiques de l'architecture respective d'un module fonctionnel et d'un module de couplage ;
La figure 4 montre la structure des messages circulant sur les bus internes et externes-;
La figure 5 montre un exemple de l'architecture fonctionnelle d'une unité de contrôle assurant le transfert d'informations entre un module fonctionnel ou de couplage et les bus internes.

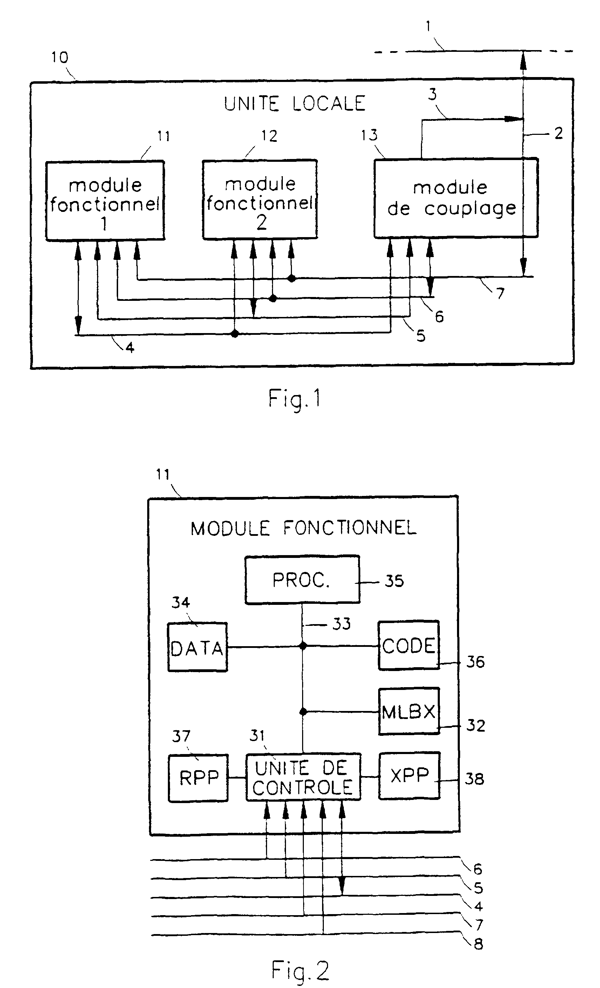

La figure 1 montre une unité locale 10 ou étagère embarquée à bord d'un aérodyne, connectée à un bus externe 1 appelé "bus avion".
Cette unité locale 10 comprend une pluralité de modules fonctionnels 11,12 et au moins un module de couplage 13, enfichés dans un fond de panier leur permettant de se connecter à un ensemble de bus internes 4 à 7, le module de couplage 13 assurant l'interconnexion entre le bus externe 1 et les bus internes 4 à 7.

L'unité locale 10 comprend au moins autant de bus internes 4 à 6 que de modules susceptibles d'émettre des messages à destination des autres modules de l'unité locale 10 ou d'un module situé dans une autre unité locale connectée au bus externe 1, et un bus supplémentaire 7 connecté au bus externe 1 par un moyen de connexion 2, de manière à ce que les messages transitant sur le bus externe soient diffusés vers les modules 11,12 de l'unité locale 10. Ainsi, chaque module 11 à 13 susceptible d'émettre des messages dispose d'un bus 4 à 6 sur lequel il est le seul émetteur.

Le bus externe 1, ainsi que les bus internes 4 à 7 sont des bus multi-émetteurs, multi-récepteurs, multiplexés et sont gérés suivant un même protocole, les bus internes 4 à 6 étant utilisés en mono-émetteur.

De cette manière, les messages transitant sur le bus externe 1 sont transmis directement au bus interne 7, sans aucun traitement, si ce n'est une adaptation électrique pour tenir compte de la différence de niveau de tension et de forme d'onde entre le bus externe 1 et le bus interne 7.

La figure 2 montre un exemple de l'architecture interne d'un module fonctionnel 11. Ce module comprend un processeur 35 connecté par l'intermédiaire d'un bus processeur 33 à une mémoire 36 contenant le programme à exécuter, une mémoire de travail 34, ainsi qu'à une unité de contrôle 31 des bus internes 4 à 8, assurant le transfert de messages entre les bus internes 4 à 8 et une mémoire d'échange 32 également connectée au bus processeur 33 et jouant le rôle de boîte aux lettres. Cette unité de contrôle 31 est connectée à deux mémoires non volatiles 37,38 dans lesquelles sont mémorisées les caractéristiques décrivant respectivement les informations à recevoir et à émettre.

En particulier, dans le cadre de la norme ARINC 629, les informations transitent sur les bus sous la forme de blocs de données appelés "wordstrings" composant les messages émis par les différents modules raccordés aux bus. Dans ce contexte, les mémoires 37,38 contiennent pour chaque bloc de données, un numéro d'identification du bloc appelé "label", sa taille et son adresse de rangement dans la mémoire d'échange 32.

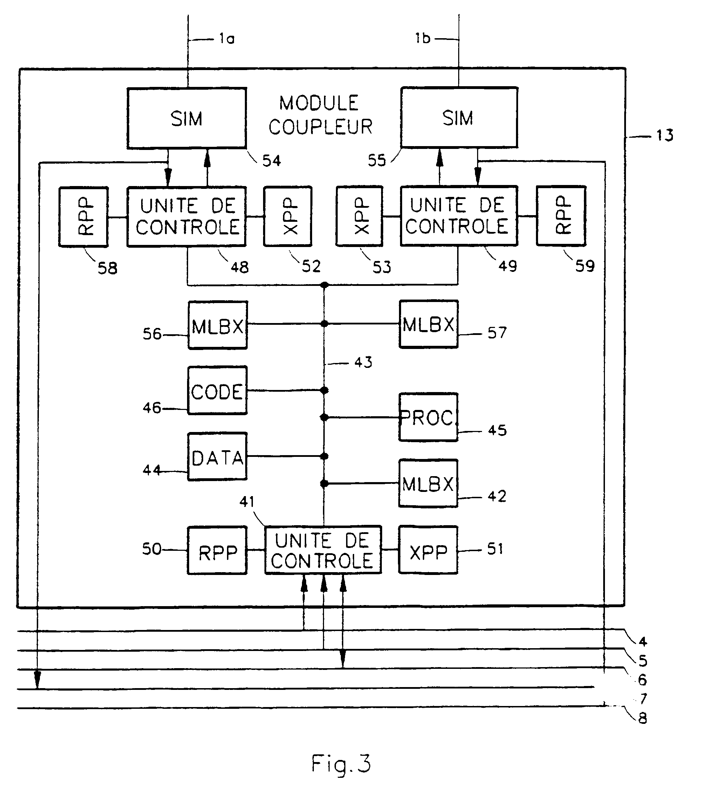

De même, la figure 3 montre un exemple de l'architecture interne d'un module de couplage 13 assurant le transfert d'informations entre deux bus externes 1a,1b et les bus internes 4 à 8. Ce module est raccordé aux bus internes 4 à 6 par l'intermédiaire d'une unité de contrôle 41, analogue à l'unité de contrôle 31 d'un module fonctionnel 11. Cette unité de contrôle assure le transfert de messages entre les bus internes 4 à 6 et une mémoire d'échange 42, le bus 6 étant affecté au module de couplage 13 pour lui permettre d'émettre des messages de service et de maintenance à destination des autres modules de l'unité locale 10.

Comme l'unité de contrôle 31 d'un module fonctionnel 11, l'unité de contrôle 41 est connectée à deux mémoires non volatiles 50 et 51 dans lesquelles sont mémorisées toutes les informations décrivant respectivement les blocs de données à recevoir, et les messages à émettre.

Le module de couplage 13 comprend également un processeur 45 connecté par l'intermédiaire d'un bus processeur 43, à une mémoire 46 contenant le programme à exécuter et une mémoire de travail 44 dans laquelle les données sont mémorisées, et une mémoire d'échange 42 dans laquelle sont stockés les messages reçus ou à émettre sur les bus internes 4 à 8.

Pour des raisons d'économie, on a adopté des formats physiques d'information sur les bus internes 4 à 8 qui diffèrent de ceux des bus externes, les contraintes de portée de transmission sur les bus internes 4 à 8 étant bien inférieures à celles imposées aux bus externes 1a,1b.

C'est pourquoi le module de couplage 13 comprend deux circuits d'interface série 54,55 connectés respectivement aux deux bus externes 1a,1b, qui assurent, dans le sens réception externe (du bus externe 1a,1b respectif vers le bus interne correspondant 7,8), la transformation des informations physiques de type alternance, en informations logiques de type TTL, et la transformation inverse dans le sens émission.
Les circuits d'interface série 54,55 assurent également une fonction de surveillance des informations physiques.

Le module de couplage 13 comprend également, deux unités de contrôle de bus externe 48,49 analogues à l'unité de contrôle 41, mais mono-canal en réception, connectées respectivement aux circuits d'interface série 54,55, pour assurer l'émission sur les bus externes 1a,1b des messages se trouvant dans une mémoire d'échange respective 56,57. Pour cela, chacune de ces deux unités de contrôle 48,49 est raccordée à une mémoire non volatile 52,53 respective contenant la description des messages à émettre, ainsi qu'à une mémoire non volatile 58,59 respective contenant la description des blocs de données à recevoir. Les deux mémoires d'échange 56,57 sont connectées au processeur 45 par l'intermédiaire du bus 43, le processeur 45 effectuant par exemple, des fonctions de sélection de données redondantes provenant de canaux physiques fond de panier différents et effectuant les transferts de données désirés, entre la mémoire d'échange 42 et les mémoires d'échange 56,57.

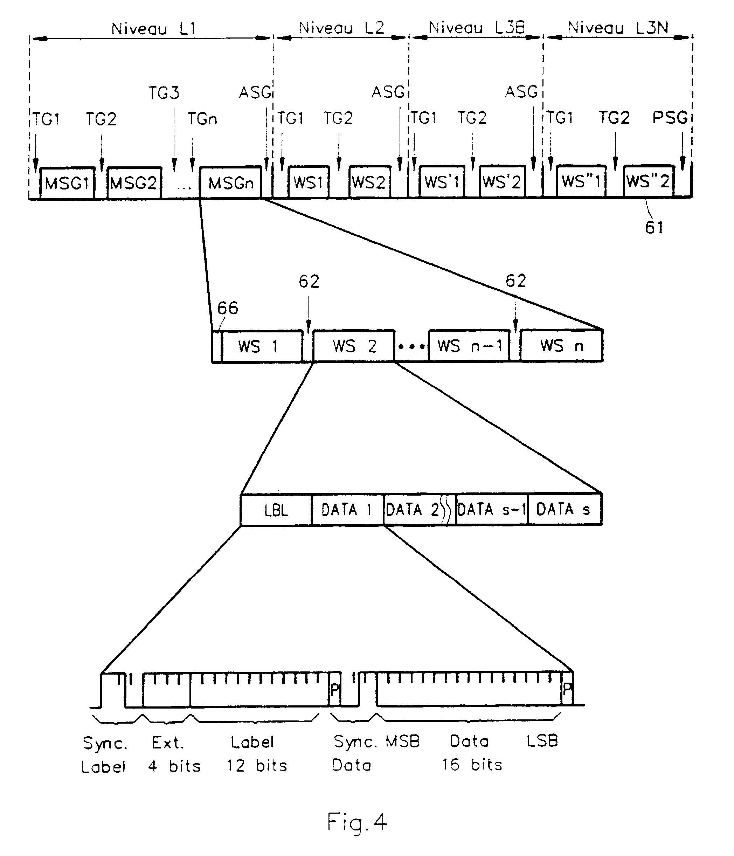

La figure 4 illustre le principe de construction des messages selon la norme ARINC 629, transitant aussi bien sur les bus internes que les bus externes. Ces messages sont regroupés en trames périodiques de période TI comprenant successivement, par terminal émetteur sur le bus considéré :
- un message, de taille variable MSG1, MSG2, ... MSGn, dit de niveau périodique L1,
puis, en fonction de l'espace restant libre dans la trame 61,
- au plus un bloc de données WS1, WS2, dit de niveau apériodique L2,
- au plus un bloc de données WS1', WS2', dit de niveau apériodique L3B, et éventuellement
- au plus un bloc de données WS1", WS2", par niveau apériodique L3N, plusieurs niveaux L3N pouvant se succéder dans la trame 61.

Les différents niveaux L1, L2, L3B et L3N peuvent être détectés grâce à un intervalle de temps ASG prédéfini qui les sépare, les fins des trames 61 étant repérées grâce à un intervalle de temps PSG prédéfini.

Chaque message de niveau L1 est constitué par une information de synchronisation 66, puis par une succession d'un à 31 bloc de données WS 1 à WS n, séparés par un intervalle de temps 62 prédéfini.

Chaque bloc de données est constitué d'une succession de mots de 20 bits, comprenant un mot de label LBL identifiant l'émetteur et le contenu du bloc de données, suivi de 0 à 256 mots de données DATA 1 à DATA s, le premier mot de données DATA 1 1 indiquant le nombre de mots de données du bloc de données dans le cas d'un "wordstring de longueur variable uniquement. Un mot de label LBL comprend 3 bits de synchronisation, 4 bits d'extension permettant d'identifier l'émetteur du bloc de données, 12 bits d'identification du contenu du bloc de données et un bit de parité P. Les mots de données comprennent 3 bits de synchronisation, suivis de 16 bits de donnée et d'un bit de parité P.

Il est à noter que le repérage des informations associées à un label ne se fait pas au niveau des messages, mais au niveau des blocs de données. Par conséquent, tous les services de transfert de données effectués par les unités de contrôle 31,41 et 48,49 sont effectués bloc de données par bloc de données, et non pas message par message.

En réception, tous les blocs de données circulant sur les bus internes 4 à 8 sont examinés par les unités de contrôle 31,41. Lorsqu'un bloc de données comprend un label indiqué dans la mémoire 37,50 correspondante, l'unité de contrôle 31,41 range ce bloc de données dans la mémoire d'échange 32,42, à l'adresse associée au code d'identification dans la mémoire 37,50, à une adresse qui dépend du numéro de bus interne par lequel le message a été reçu et d'informations lues dans la mémoire 37,50, associées au label. Le numéro de bus qui a transmis le message permet en effet d'identifier le module émetteur, puisque chaque bus interne est affecté à un unique module émetteur.

Pour ne pas avoir à interrompre les applications exécutées par le processeur 35 ou 45 des modules fonctionnels 11,12, ou du module de couplage 13, les zones de mémorisation des blocs de données reçus peuvent être gérées en zone tampon tournante, permettant ainsi de différer la lecture des données par le processeur 35,45, sans risque d'écrasement des données.

Les requêtes de réception des applications sont pilotées par le processeur 35 ou 45 qui effectue un transfert de la mémoire d'échange 32,42 vers les mémoires de données 34,44 respectives des processeurs, à chaque trame reçue, de manière à vider régulièrement les zones tampons tournantes des mémoires d'échange 32,42.

En émission, le processeur 35 ou 45 calcule une somme de contrôle (Cyclic Redundancy Check) sur chacun des blocs de données du message à émettre, puis envoie successivement chaque bloc de données du message accompagné de sa somme de contrôle dans la mémoire d'échange 32,42 à l'adresse correspondant au bloc de données.

Ensuite, dans le cas où les bus internes 4 à 8 sont gérés suivant la norme ARINC 629, l'unité de contrôle 31,41 lit en mémoire non volatile 38,51 la description des messages à émettre au prochain accès bus. L'unité de contrôle 31,41 qui est en permanence à l'écoute sur son bus d'émission 4, 6, cherche à détecter le niveau L1, L2, L3B où L3N en cours, et détermine l'instant où il peut émettre à l'intérieur du niveau en cours, grâce à la détection d'un intervalle de temps TG spécifique de l'unité de contrôle 31,41.

Il émet ainsi les blocs de données d'un message périodique pendant le niveau L1, et les éventuels blocs de données apériodiques, sur requête des processeurs, pendant les niveaux L2, L3B et L3N. Le niveau L2 est en principe réservé aux messages apériodiques courts et urgents, le niveau L3N aux autres messages apériodiques longs, et le niveau L3B aux messages apériodiques qui n'ont pas pu être émis lors des cycles d'émission précédents.

Selon la norme ARINC 629, chaque message émis par l'unité de contrôle 31,41 sur le bus 4,6 affecté au module 11,13 est simultanément reçu par ce même circuit 31,41 qui peut ainsi détecter des erreurs d'émission en comparant les données émises avec celles reçues.
Il en est de même pour chaque message émis par les unités de contrôle 48,49 sur les bus externes 1a,1b.

Dans le cas du module de couplage 13, l'émission d'un message sur l'un des bus externes 1a,1b consiste tout d'abord pour le processeur 45 à transférer les informations de la mémoire d'échange 42 vers l'une ou l'autre des mémoires d'échange 56,57 sélectionnée en fonction du bus externe 1a ou 1b sur lequel le message doit être émis, puis pour l'unité de contrôle 48,49 reliée à la mémoire d'échange 56,57 sélectionnée, à transférer l'information sous la forme de blocs de données sur le bus externe 1a,1b auquel il est connecté. Les messages arrivant sur les bus internes 4 à 6 à destination de terminaux connectés sur les bus externes 1a,1b sont ainsi transmis au fur et à mesure.

Selon la norme ARINC 629, chaque module 11,12,13 connecté à un bus de ce type, est associé à un intervalle de temps unique TG, et doit tout d'abord se mettre à l'écoute du bus pour détecter si celui-ci est libre pendant cet intervalle TG. Si cette condition se produit, il peut alors émettre le message. Par ailleurs, afin d'éviter que les modules affectés aux intervalles temps les plus courts monopolisent les bus, il leur est interdit d'émettre plusieurs messages sur un même niveau L1, L2, L3B ou chacun des niveaux L3N durant la période TI de la trame, chaque interdiction étant successivement levée par l'information de changement de niveau ASG.

En ce qui concerne la synchronisation des émissions sur les différents bus internes d'une étagère, plusieurs solutions sont possibles.

Dans une première solution, on laisse chaque unité de contrôle gérer ses émissions indépendamment des autres modules, ce qui a pour conséquence un asynchronisme complet des différents bus internes et une indépendance parfaite entre les modules. Dans une seconde solution, les unités de contrôles comprennent un mécanisme tolérant aux pannes, leur permettant de se synchroniser entre elles, en écoutant l'ensemble des bus 4 à 8, en éliminant éventuellement les lignes défaillantes. La synchronisation est réalisée au niveau de la trame, toutes les unités de contrôle connectées aux bus internes 4 à 8 démarrant en même temps d'une manière prédéfinie, l'émission de chaque nouvelle trame.

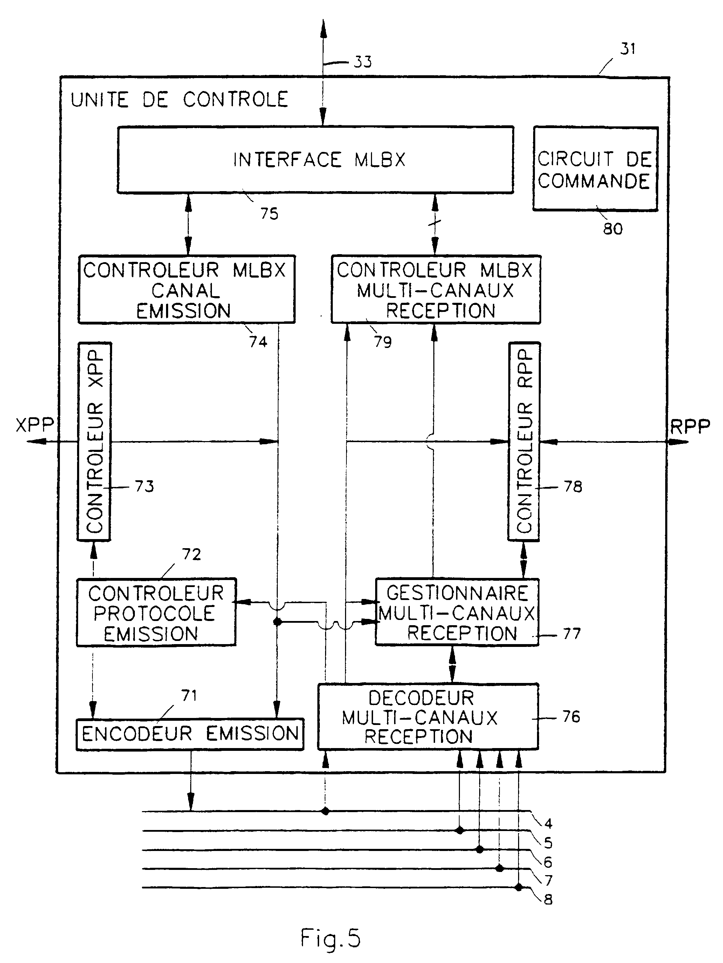

Sur la figure 5, une unité de contrôle 31,41 comprend, pour l'émission de messages sur le bus interne d'émission, par exemple 4, affecté à l'unité de contrôle :
- un circuit encodeur d'émission 71 connecté au bus interne 4, réalisant le formattage, la sérialisation et l'encodage des informations à émettre,
- un circuit de contrôle de protocole d'émission 72 qui réalise la gestion du protocole (format temporel) de prise de décision d'émission des informations sur le bus, et le pilotage du format spatial des messages en émission,
- un circuit de contrôle 73 de la mémoire non volatile d'émission 38,51 contenant la description des messages à émettre, et l'adresse de ces derniers dans la mémoire d'échange 32,42, ce circuit de contrôle 73 effectuant la lecture des informations de description associées à chacun des blocs de données d'un message à émettre donné, contenues dans la mémoire non volatile 38,51, et
- un circuit de contrôle en émission 74 de la mémoire d'échange 32,42 qui réalise la gestion en émission d'un circuit d'interface 75 pour l'acquisition et la surveillance des informations à émettre, le circuit d'interface 75 effectuant la gestion des différentes demandes d'accès à la mémoire d'échange 32,42 via le bus de transfert d'adresses et de données 33,43.

L'unité de contrôle 31,41 comprend, pour la réception des informations transitant sur les bus internes 4 à 8 :
- un circuit décodeur de réception multicanaux 76 conçu pour détecter l'activité de chaque bus ou canal, désérialiser les informations reçues sur chacun des canaux, et effectuer des surveillances de niveau physique et partiellement logique canal par canal,
- un circuit de gestion de réception multicanaux 77 qui effectue la gestion et la surveillance des mots de label et de donnée reçus sur chaque canal, ainsi que l'ordonnancement des traitements à effectuer pour la réception des informations transmises par chaque canal,
- un circuit de contrôle 78 de la mémoire non volatile de réception 37,50 contenant la description des blocs de données à recevoir, et l'adresse de ces derniers dans la mémoire d'échange 32,42, ce circuit de contrôle 78 effectuant la lecture des informations de description associées à un bloc de données reçu par un canal, contenues dans la mémoire non volatile 37,50, et
- un circuit de contrôle de réception 79 de la mémoire d'échange 32,42 qui réalise la gestion en réception du circuit d'interface 75 pour la fourniture et la surveillance des informations reçues.

Par ailleurs, l'unité de contrôle 31,41 comprend un circuit de commande 80 qui permet à une entité externe de configurer, surveiller et commander les différents organes de l'unité de contrôle.

Il convient de noter que le circuit décodeur de réception multicanaux 76 est également connecté au bus 4 de manière à recevoir les blocs de données émis par le circuit encodeur d'émission 71. Les informations à émettre utilisées par le circuit encodeur d'émission 71 sont généralement fournies directement au circuit de gestion de réception multi-canaux 77, de manière à permettre le contrôle de la qualité de l'émission par comparaison des données émises avec celles reçues.

Une telle unité de contrôle 31,41 peut avantageusement être intégrée dans un ASIC.

## Revendications

1. Dispositif de communication entre une pluralité de modules fonctionnels (11,12) installés dans une unité locale (10) et un bus externe (1) multi-émetteur, multi-récepteur multiplexé de communication avec d'autres unités locales, caractérisé en ce qu'il comprend :
- au moins autant de bus internes (4,5) que de modules fonctionnels (11,12) susceptibles d'émettre des informations vers les autres modules (11,12) de l'unité locale (10) et vers le bus externe (1), chaque bus interne étant de type multi-émetteur, multi-récepteur, multiplexé, et respectant le protocole temporel et le format des informations transitant sur le bus externe, lesdits modules fonctionnels (11,12) étant couplés aux bus internes (4,5) de manière à ce que chaque module (11,12) susceptible d'émettre des informations soit l'unique émetteur sur au moins l'un des bus internes (4,5), et récepteur sur les autres bus internes (6);
- un module de couplage (13) assurant le transfert vers le bus externe (1) des informations circulant sur les bus internes (4 à 6) à destination d'une autre unité locale raccordée au bus externe (1),
et
- un bus interne supplémentaire (7) pour chaque bus externe, assurant la diffusion à l'intérieur de l'unité locale (10) des informations transitant sur le bus externe (1), ce bus interne de diffusion (7) étant de même type que lesdits bus internes (4,5), et étant relié au bus externe (1) et aux modules fonctionnels (11,12).

2. Dispositif selon la revendication 1,
caractérisé en ce que chaque module fonctionnel (11,12) comprend une unité de contrôle (31) connecté à chacun des bus internes (4 à 7), conçu pour assurer le tri de toutes les informations circulant sur les bus internes (4 à 7) pour ne recevoir que les informations destinées au module, et pour émettre des informations sur le bus interne (4,5) affecté en émission audit module (11,12).

3. Dispositif selon la revendication 2,
caractérisé en ce que l'unité de contrôle (31) est connectée à des mémoires non volatiles (37,38) contenant l'identification et la description des caractéristiques des informations à recevoir et à émettre, ainsi que le séquencement des informations à émettre, l'unité de contrôle (31) comprenant des moyens pour détecter sur les bus internes (4 à 7) les informations à recevoir, et pour transférer celles-ci dans une mémoire d'échange (32).

4. Dispositif selon la revendication 2 ou 3,
caractérisé en ce que l'unité de contrôle (31) comprend des moyens pour écouter le bus (4,5) affecté à l'émission, pour comparer durant leur émission les informations émises sur le bus avec les informations lues simultanément sur le bus, et pour invalider l'émission de l'information en cours d'émission et engendrer un signal d'erreur lorsque la comparaison fait apparaître une différence.

5. Dispositif selon l'une des revendications précédentes,
caractérisé en ce que le module de couplage (13) comprend des moyens (41) pour reconnaître les informations circulant sur les bus internes (4,5) qui sont à envoyer sur le bus externe (1).

6. Dispositif selon la revendication 1,
caractérisé en ce que les informations circulant sur les bus internes (4 à 7) et le bus externe (1) sont réparties dans des trames (61) périodiques, et dont les caractéristiques sont définies dans les tables (37,38) connectées d l'unité de contrôle (31).

7. Dispositif selon l'une des revendications 2 à 6,
caractérisé en ce que l'unité de contrôle (31) est intégrée dans un ASIC.

8. Dispositif selon l'une des revendications précédentes,
caractérisé en ce que le module de couplage (13) comprend une première unité de contrôle (41) connectée aux bus internes (4 à 6) non raccordés au bus externe, une première mémoire d'échange (42) connectée à l'unité de contrôle (41), à un processeur (45), à une seconde mémoire d'échange (56), et à une seconde unité de contrôle (48) analogue à la première (41) et assurant le transfert des informations de la seconde mémoire d'échange (56) vers le bus externe (1a).

9. Dispositif selon l'une des revendications précédentes,
caractérisé en ce que le module de couplage (13) dispose d'un bus interne (6) sur lequel il est l'unique émetteur, lui permettant d'envoyer aux modules fonctionnels (11,12) de l'unité locale (10) des informations de service et de maintenance, de manière à pouvoir indiquer aux modules fonctionnels (11,12) les défauts de transfert d'informations sur le bus externe (1) et les pannes éventuelles.

10. Dispositif selon l'une des revendications précédentes,
caractérisé en ce que le module de couplage (13) comprend un circuit d'interface série (54) assurant la conversion du signal analogique véhiculant les informations sur le bus externe (1a) en un signal logique appliqué au bus interne de diffusion (7), et inversement pour transférer les informations émises par la seconde unité de contrôle (48) vers le bus externe (1a).

11. Dispositif selon l'une dès revendications 8 à 10,
caractérisé en ce que le module de couplage (13) est connecté à un second bus externe (1b) de même type que le premier bus externe (1a), et relié à un bus interne (8) par l'intermédiaire d'un second circuit d'interface série (55), le processeur (45) étant connecté à une troisième mémoire d'échange (57) et au second bus externe (1b) par l'intermédiaire d'une troisième unité de contrôle (49) et du second circuit d'interface série (55).

## Claims

1. A device for communications between a plurality of functional modules (11, 12) installed in a local unit (10) and a multiplexed, multitransmitter, multireceiver external bus (1) for communications with other local units, said device comprising:
- at least as many internal busses (4, 5) as there are functional modules (11, 12) susceptible of transmitting data to the other modules (11, 12) of said local unit (10) and to said external bus (1), each internal bus being of the multiplexed, multitransmitter, multireceiver type, and complying with the time protocol and the format of the data transiting on said external bus, said functional modules (11, 12) being coupled to said internal busses (4, 5) so that each module (11, 12) susceptible of transmitting data is the sole transmitter on at least one of said internal busses (4, 5) and a receiver on the other internal busses (6);
- a coupling module (13) designed to transfer, to said external bus (1), data circulating on said internal busses (4 to 6) and destined for another local unit connected to said external bus (1).
- an additional internal bus (7) for each external bus, ensuring dissemination within said local unit (10) of the data transiting on said external bus (1), this dissemination bus (7) being of the same type as said internal busses (4, 5) and being connected to said external bus (1) and to said functional modules (11, 12).

2. The device according to claim 1,
characterised in that each functional module (11, 12) comprises a control unit (31) connected to each of the internal busses (4 to 7), designed to sort all the data circulating on the internal busses (4 to 7) so as to only receive data destined for the module and to transmit data to said module on the internal bus (4, 5) allocated to transmission (11, 12).

3. The device according to claim 2,
characterised in that the control unit (31) is connected to non-volatile memories (37, 38) containing the identification and description of the characteristics of the data to be received and transmitted, as well as the sequencing of the data to be transmitted, the control unit comprising a means for detecting, on the internal busses (4 to 7), the data to be received, and for transferring the latter into an exchange memory (32).

4. The device according to claim 2 or 3,
characterised in that the control unit (31) comprises a means for listening in on the bus (4, 5) assigned to transmission, for comparing, while they are being transmitted, the data transmitted on the bus with the data read simultaneously on the bus, and for invalidating the data transmission in process and generating an error signal when the comparison reveals a variance.

5. The device according to one of the preceding claims,
characterised in that the coupling module (13) comprises a means (41) for recognizing which data circulating on the internal busses (4, 5) are to be transmitted to the external bus (1).

6. The device according to claim 1,
characterised in that the data circulating on the internal busses (4 to 7) and on the external bus (1) are broken down into periodic frames (61), and of which the characteristics are defined in the tables (37, 38) connected to the control unit (31).

7. The device according to claims 2 to 6,
characterised in that the control unit (31) is integrated into an ASIC.

8. The device according to one of the preceding claims,
characterised in that the coupling module (13) comprises a first control unit (41) connected to the internal busses (4 to 6) not connected to the external bus, a first exchange memory (42) connected to said control unit (41), to a processor (45), to a second exchange memory (56), and to a second control unit (48) similar to the first one (41) and transferring data from said second exchange memory (56) to the external bus (1a).

9. The device according to one of the preceding claims,
characterised n that the coupling module (13) has an internal bus (6) on which it is the sole transmitter, enabling it to send service and maintenance data to the functional modules (11, 12) of the local unit (10), so as to indicate, to the functional modules (11, 12) the data transfer faults on the external bus (1) as well as any failures.

10. The device according to one of the preceding claims,
characterised in that the coupling module (13) comprises a series interfacing circuit (54) converting the analogue signal conveying the data on the external bus (1a) into a logic signal applied to the internal dissemination bus (7), and vice versa to transfer data emitted by the second control unit (48) to said external bus (1a).

11. The device according to claims 8 to 10,
characterised in that the coupling module (13) is connected to a second external bus (1b) of the same type as the first external bus (1a), and connected to an internal bus (8) via a second series interfacing circuit (55), the processor (45) being connected to a third exchange memory (57) and to said second external bus (1b) via a third control unit (49) and the second series interfacing circuit (55).

## Patentansprüche

1. Vorrichtung zur Kommunikation zwischen einer Vielzahl funktioneller Module (11, 12), die in einer Lokaleinheit (10) installiert sind, und einem externen Multiplex-Bus (1) mit mehreren Sendern und mehreren Empfängern zur Kommunikation mit anderen Lokaleinheiten, dadurch gekennzeichnet, daß sie folgendes aufweist:
- mindestens ebenso viele interne Busse (4,5) wie funktionelle Module (11, 12), die in der Lage sind, Informationen an die anderen Module (11, 12) der Lokaleinheit (10) und an den externen Bus (1) zu senden, wobei jeder Interne Bus ein Multiplex-Bus mit mehreren Sendern und mehreren Empfängern ist, und die das Zeitprotokoll sowie das Format der Informationen berücksichtigen, die den externen Bus durchlaufen, wobei die funktionellen Module (11, 12) mit den internen Bussen (4,5) so gekoppelt sind, daß jedes Modul (11, 12), das in der Lage ist, Informationen zu senden, der einzige Sender auf mindestens einem der internen Busse (4, 5) und Empfänger auf den anderen internen Bussen (6) ist;
- ein Kopplungsmodul (13), das die Übertragung der Informationen, die auf den internen Bussen (4 bis 6) in Richtung zu einer anderen mit dem externen Bus (1) verbundenen Lokaleinheit zirkulieren, zum externen Bus (1) gewährleistet,
- einen zusätzlichen internen Bus (7) für jeden externen Bus, um die Verteilung der den externen Bus (1) durchlaufenden Informationen im Inneren der Lokaleinheit (10) sicherzustellen, wobei dieser interne Verteilerbus (7) vom selben Typ wie die internen Busse (4, 5) ist und mit dem externen Bus (1) sowie den funktionellen Modulen (11, 12) verbunden ist.

2. Vorrichtung nach Anspruch 1, dadurch gekennzeichnet, daß jedes funktionelle Modul (11, 12) eine Steuereinheit (31) ausweist, die mit jedem der internen Busse (4 bis 7) verbunden und so ausgelegt ist, daß sie die Sortierung aller auf den internen Bussen (4 bis 7) zirkulierenden Informationen gewährleistet, um nur die für das Modul bestimmten Informationen zu empfangen, und Informationen auf dem diesem Modul (11, 12) beim Senden zugeordneten internen Bus (4, 5) zu senden.

3. Vorrichtung nach Anspruch 2, dadurch gekennzeichnet, daß die Steuereinheit (31) an nichtflüchtige Speicher (37, 38) angeschlossen ist, welche die Kennzeichnung und die Beschreibung der Merkmale der zu empfangenden und zu sendenden Informationen sowie die Sequenzierung der zu sendenden Informationen enthalten, wobei die Steuereinheit (31) Mittel zum Detektieren der zu empfangenden Informationen auf den internen Bussen (4 bis 7) und zum Übertragen derselben in einen Austauschspeicher (32) aufweist.

4. Vorrichtung nach Anspruch 2 oder 3, dadurch gekennzeichnet, daß die Steuereinheit (31) Mittel zum Abhören des zum Senden vorgesehenen Busses (4, 5) aufweist, um während ihres Sendens die auf dem Bus gesendeten Informationen mit den gleichzeitig auf dem Bus gelesenen Informationen zu vergleichen und das Senden der im Senden begriffenen Information zu verhindern und ein Fehlersignal zu erzeugen, wenn der Vergleich eine Abweichung ergibt.

5. Vorrichtung nach einem der vorhergehenden Ansprüche, dadurch gekennzeichnet, daß das Kopplungsmodul (13) Mittel (41) zum Erkennen der auf den internen Bussen (4, 5) zirkulierenden Informationen, die auf dem externen Bus (1) zu senden sind, aufweist.

6. Vorrichtung nach Anspruch 1, dadurch gekennzeichnet, daß die auf den internen Bussen (4 bis 7) und auf dem externen Bus (1) zirkulierenden Informationen in Zeitrahmen (61) aufgeteilt sind, deren Eigenschaften in den mit der Steuereinheit (31) verbundenen Tabellen (37, 38) definiert sind.

7. Vorrichtung nach einem der Ansprüche 2 bis 6, dadurch gekennzeichnet, daß die Steuereinheit (31) in eine ASIC integriert ist.

8. Vorrichtung nach einem der vorhergehenden Ansprüche, dadurch gekennzeichnet, daß das Kopplungsmodul (13) eine erste Steuereinheit (41) aufweist, die an die internen Busse (4 bis 6) angeschlossen ist, welche nicht mit dem externen Bus verbunden sind, einen ersten Austauschspeicher (42), der mit der Steuereinheit (41), einem Prozessor (45), einem zweiten Austauschspeicher (56) und einer zweiten Steuereinheit (48), analog zur ersten (41), verbunden ist und die Übertragung der Informationen des zweiten Austauschspeichers (56) zum externen Bus (1a) sicherstellt.

9. Vorrichtung nach einem der vorhergehenden Ansprüche, dadurch gekennzeichnet, daß das Kopplungsmodul (13) über einen internen Bus (6) verfügt, auf dem es der einzige Sender ist, was es ihm gestattet, Dienst- und Wartungsinformationen an die funktionellen Module (11, 12) der Lokaleinheit (10) zu senden, um den funktionellen Modulen (11, 12) Fehler bei der Informationsübertragung auf dem externen Bus (1) und mögliche Störungen anzuzeigen.

10. Vorrichtung nach einem der vorhergehenden Ansprüche, dadurch gekennzeichnet, daß das Kopplungsmodul (13) eine serielle Schnittstelle (54), welche die Umwandlung des Analogsignals, das die Informationen auf dem externen Bus (1a) trägt, in ein Logiksignal umzuwandeln, das dem internen Verteilungsbus (7) zugewiesen wird, und umgekehrt, zum Übertragen der von der zweiten Steuereinheit (48) zum externen Bus (1a) gesendeten Informationen aufweist.

11. Vorrichtung nach einem der Ansprüche 8 bis 10, dadurch gekennzeichnet, daß das Kopplungsmodul (13) mit einem zweiten externen Bus (1b) desselben Typs wie der erste externe Bus (1a) sowie mit einem internen Bus (8) mittels einer zweiten seriellen Schnittstelle (55) verbunden ist, wobei der Prozessor (45) mittels einer dritten Steuereinheit (49) und der zweiten seriellen Schnittstelle (55) an einen dritten Austauschspeicher (57) und an den zweiten externen Bus (1b) angeschlossen ist.
